# EUROPEAN PATENT APPLICATION

(11) **EP 0 768 778 A1**
(43) Date of publication of application: **16.04.1997**
(21) Application number: 95202735.7
(22) Date of filing: 11.10.1995
(51) Int. Cl.: H04L 25/03

(54) **Method for transmission line impulse response equalisation and a device to perform this method**

(71) Applicant: ALCATEL BELL Naamloze Vennootschap, B-2018 Antwerpen 1 (BE)
(72) Inventor: van Kerckhove, Jean-Francois, B-1390 Nethen (BE)

(57) **Abstract**

A set of parameters (W) is calculated for an equalizer which equalizes a transmission line impulse response (LIR) in such a way that the equalized impulse response (EIR) approximates a target impulse response (TIR) with predetermined length (L).

An error function (E) is minimized via eigenvalue-eigenvector calculation of a channel dependent matrix (O). This channel dependent matrix (O) is build up from a signal (X), a distorted signal (Y), and length (L) and delay (D) of the target impulse response (TIR). The error function (E) comprises a first contribution which represents the difference between the equalized impulse response (EIR) and the target impulse response (TIR) and a second contribution which represents the energy (E_{DC}) that is transmitted in unused frequency bands. The eigenvector corresponding to the minimum eigenvalue of the channel dependent matrix (O) represents the set of equalizer parameters (W).

## Description

The present invention relates to a method for calculating a set of equalizer parameters as described in the preamble of claim 1, a device for calculating such a set of equalizer parameters as described in the preamble of claim 9, and a demodulator including such a device as described in the preamble of claim 10.

Such a method and equipment to perform such a method are already known in the art, e.g. from *the article 'Adaptive Channel Memory Truncation for Maximum Likelihood Sequence Estimation', written by D.D. Falconer and F.R. Magee, Jr., and published in The Bell System technical Journal, Vol. 52, No. 9, November 1973, from page 1541 to page 1562.* As described in the second paragraph of the introduction on page 1541, an equalizer or linear prefilter which forces the overall impulse response of the channel/prefilter combination to approximate a desired truncated impulse response is presented therein. The overall impulse response of the channel/prefilter combination is equivalent to the equalized impulse response mentioned in the preambles of claims 1, 9 and 10, whilst the desired truncated impulse response in the above mentioned article is called a target impulse response with predetermined length in the present application. In the known method, the desired impulse response is obtained by calculating an eigenvector corresponding to the minimum eigenvalue of a certain channel dependent matrix. This channel dependent matrix and more specifically the minimum eigenvalue thereof is representative for a mean square error between the output of the prefilter and the output of the desired prefilter, the desired prefilter having an impulse response equal to the just mentioned desired truncated impulse response. When minimizing the mean square error, the desired impulse response is optimized. As is proven in section III of the above cited article, the known method then adaptively or iteratively calculates the linear prefilter parameters from the desired truncated impulse response. Thereto, in successive iterations, the Viterbi algorithm is applied to the prefilter output, the result thereof is applied to the desired prefilter and the output of this desired prefilter is subtracted from the prefilter output in such a way that an error sequence for adjustment of the desired impulse response and prefilter parameter set is obtained. The receiver structure allowing to perform the known method is drawn in Fig. 3 on page 1545 of the above mentioned article. Although the known technique or derivatives thereof wherein e.g. the Viterbi algorithm is not used exhibit very low mean square error values and as a consequence a theoretically negligible intersymbol interference, its applicability in ADSL (Asymmetric Digital Subscriber Line) is doubtful. The main reason is linked to the finite precision limitations of the hardware. Indeed, the equalizer transfer function obtained when applying the known technique in ADSL, will boost the unused frequency band, i.e. the frequency band below 25 kHz, and will attenuate the tones in the ADSL passband, which approximately cover the frequency band from 25 kHz to 138 kHz. A first consequence is the decrease of numerical stability. It is even possible that the attenuation is so severe that the first stages of an FFT demodulator as is used in ADSL receivers rounds off the frequency components to zero such that the frequency domain equalizer of the receiver is unable to boost these tones again. An additional consequence is that, by implementing the known method in ADSL, the attenuation is very severe at the filter boundaries between the unused and used frequency bands. This is a result of the very sharp filter edges there. The pilot tone will very likely be located close to the region where the transmission channel exhibits a relatively low attenuation. This is mostly located near the lower downstream filter edge. Synchronization may therefore be subjected to an unexpected decrease of the signal to noise ratio of the pilot tone

An object of the present invention is to provide a method and equipment for calculating a set of equalizer parameters of the above known type but wherein numerical instability due to amplification of unused frequency bands and attenuation of used frequency bands is optimized, and wherein the above mentioned synchronization problem is avoided.

According to the invention, this object is achieved in the method, device and demodulator described in claims 1, 9 and 10 respectively.

Indeed, by adding to the difference between the equalized and the target impulse response, a second contribution, an additional degree of freedom which allows to shape the equalizer impulse response is provided. By adding a new error source to the mean square error criterion, the present invention prevents boosting unused frequency bands instead of used frequency bands. The higher the energy located in the unused frequency band, the higher the additional error. As a result, the present method searches for equalizer parameters which define an equalizer impulse response that does not boost unused frequency bands. From the above explanation, it is clear that in the present invention, the shortcomings with respect to numerical stability and synchronization are overcome.

A further feature of the present invention is that the first contribution to the channel dependent matrix, representing the distance between equalized and target impulse response, has the form described by claim 2.

Indeed, as will be proven later on in the description, modeling the transmission line in a certain predetermined way, allows to build up the first part of the channel dependent matrix O as given by the mathematical expression in claim 2.

In different implementations of the present method, step d of generating a channel dependent matrix O may be simplified. Therefore, assumptions as described e.g. in claims 3 or 4 have to be made. Assuming, as described in claim 3, that the transmission line is not plagued by noise, or assuming, as described in claim 4, that the spectral density of the input signal applied to the transmission line by the transmitter has a flat shape, allows to simplify the mathematical expression of the channel dependent matrix O, and evidently reduces the number of calculations necessary in step d to build up this matrix. For further details, reference is made to the description later on in this application.

An additional characteristic feature of the present invention is that, in implementations thereof wherein the transmission line is not supposed to be noiseless, the noise is measured in a step included in the present method before the channel dependent matrix O is build up. This feature is described in claim 5.

A further characteristic feature of the present method is that, still in implementations thereof wherein the transmission line is not supposed to be noiseless, the noise is taken into account in a way described in claim 6. Indeed, by modelling noise measured on the transmission line via an additive noise source, cascade connected to a noiseless transmission line, elements of the autocorrelation matrix RYY are modified as described in claim 6. Later on, it will be seen how the expression of RYY given in claim 6 is mathematically derived.

Yet a further characteristic feature of the present method is that, as described in claim 7, the second integer number of sample periods can be expressed as a function of the amplitude and the sample index number of the transmission line impulse response sample with highest amplitude. This feature corresponds to the intuitive feeling that the shorter target impulse response will approximate the transmission line impulse response in an optimized way only if this shorter target impulse response is delayed in such a way that the location in time of its peak values approximate the peak values of the transmission line impulse response.

In a further implementation of the method according to the present invention, described in claim 8, steps c, d and e are executed for a sequence of acceptable delay values. In this way, for each delay value within an interval of acceptable delay values, a corresponding channel dependent matrix having its specific minimum eigenvalue is found. It will again be proven later on that this minimum eigenvalue is a measure for the error function that has to be minimized, and therefore, in this further embodiment, only the channel dependent matrix with smallest minimum eigenvalue is maintained to calculate therefrom in steps f and g the set of equalizer parameters.

The above mentioned and other objects and features of the invention will become more apparent and the invention itself will be best understood by referring to the following description of an embodiment taken in conjunction with the accompanying drawings wherein:
Fig. 1 represents a block scheme of an embodiment of a demodulator according to the present invention; and
Fig. 2 represents a digital model for the cascade connection of a transmission line and an embodiment of an equalizer whose time domain equalizer parameters are calculated according to the present method.

In a theoretically ideal multicarrier system, i.e. in a system with infinitely large data symbols, the impulse response length of the transmission line is negligible compared to the length of data symbols transmitted over this transmission line. In known multicarrier systems however, acceptable latency or maximum acceptable delay between input and output of data symbols transmitted over a transmission line limits the length of these symbols. As is specified in *section 6.2.11 on page 22 of the draft American National Standard for Telecommunications on ADSL (Asymmetric Digital Subscriber Line), published by ANSI (American National Standards Institute) in April 1994,* the length of a discrete multi tone (DMT) symbol is limited. In ADSL applications, the transmission line impulse response length is not negligible compared to the symbol length and intersymbol interference will occur. As a consequence, successively transmitted symbols are spread out and interfere as a result of which the transmission is distorted.

In general, two different techniques are known to compensate for such intersymbol interference. In a first technique, called cyclic prefix extension, data symbols are extended at the transmitters. Gaps are created at the edges of the data symbols e.g. by inserting spare time between successive symbols. In these gaps intersymbol interference can occur without distorting the transmission. The transmission efficiency or throughput efficiency however, decreases with increasing lengths of the gaps or cyclic extensions. In the second intersymbol interference compensating technique, the transmission line impulse response is equalized by an equalizer, which is a digital filter at the receiver's side. The objective of the equalizer is to compress the transmission line impulse response to a shorter overall impulse response. Full equalization of the transmission line impulse response however requires a large amount of computation. The draft ADSL Standard already mentioned above specifies the combination of both techniques. Equalizing the transmission line impulse response renders the transmission line impulse response length short enough to enable intersymbol interference compensation via cyclic prefix extension with tolerable prefix length, and vice versa: compensation via cyclic prefix extension allows the equalizer to be of acceptable computation complexity.

In the following paragraphs, an algorithm will be derived which enables calculation of equalizer parameters in a fast and stable way. Before entering the mathematical approach of the problem, the ADSL (Asymmetric Digital Subscriber Line) environment, i.e. the demodulating part, wherein such an equalizer is used, will be described.

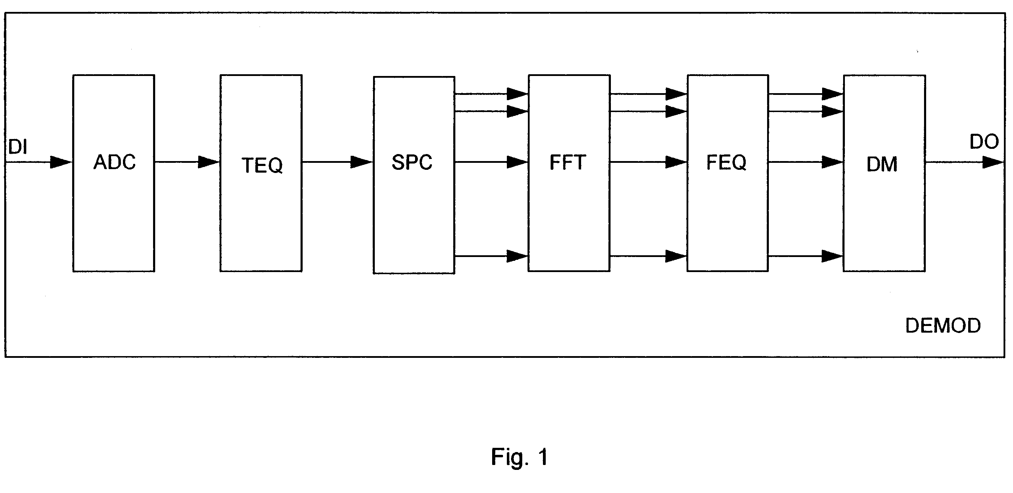

The demodulator DEMOD of Fig. 1 includes an analog to digital converter ADC, a time domain equalizer TEQ, a serial to parallel converter SPC, a fast fourier transform processing unit FFT, a frequency domain equalizer FEQ, and a demapper DM which are cascade connected between an input DI and an output DO of the demodulator DEMOD.

Distorted signals at the output of the transmission line, connected to the demodulator input DI but not shown in Fig. 1, enter the demodulator DEMOD via this input DI. Such a distorted signal is sampled by the analog to digital converter ADC to be converted into a time domain digital sequence which is applied to the equalizer TEQ. The time domain equalizer TEQ is a digital filter whose set of parameters is calculated based on channel dependent information in accordance to the method of the present invention. In this way, by digitally filtering the time domain digital sequence, the overall impulse response length is shortened. The so obtained equalized time domain digital sequence is transformed into an equalized parallel time domain digital sequence by the serial to parallel converter SPC. The fast fourier transform processing unit FFT converts the equalized parallel time domain digital sequence into an equalized frequency domain parallel digital sequence and applies this sequence to the frequency domain equalizer FEQ which restorates amplitude and phase of the transmitted vectors, and to the demapper DM. This equalized frequency domain parallel digital sequence is a sequence of real data which represents a set of modulated carriers. These carriers have equidistant frequencies, carry different amounts of data bits which are modulated thereon via different modulation techniques. To determine the amounts of data bits that are allocated to different carriers and to determine the modulation techniques used to modulate different carriers, a mapper included in the transmitter has to communicate with the demapper DM in the receiver. This mapper e.g. assigns 2 data bits to the first carrier and decides to modulate these 2 bits thereon via 4 QAM modulation, assigns 4 data bits to the second carrier and decides that these 4 data bits are modulated thereon via 16 QAM modulation, and so on. The demapper DM included in the demodulator DEMOD at the receiver's side as aware of the modulation techniques used for the different carriers and of the amounts of bits allocated to each of the carriers. The task of the demapper DM is thus to demodulate each carrier to obtain therefrom the exact amount of data bits modulated thereon. The demapper DM then constitutes an output sequence and supplies this output sequence to the demodulator output DO.

The block scheme of the Discrete Multi Tone demodulator DEMOD in Fig. 1 will not be described in further detail since such a detailed description is of no importance for the present invention. Further details with respect to ADSL requirements are described in the already mentioned draft ANSI Standard on ADSL whilst specific implementations of Discrete Multi Tone modulators and demodulators are found in the articles *'A multicarrier E1-HDSL Transceiver* *System with Coded Modulation', written by Peter S. Chow, Naofal Al-Dhahir, John M. Cioffi and John A. C. Bingham and published in the issue Nr. 3 May/June 1993 of the Journal of European Transactions on Telecommunications and Related Technologies (ETT), pages 257-266,* and *'Performance Evaluation of a Multichannel Transceiver System for ADSL and VHDSL Services' from Peter S. Chow et al., published in the issue Nr. 6 August 1991 of the Journal of European Transactions on Telecommunications and Related Technologies (ETT), pages 909-919.*

In the following paragraphs, the method according to the present invention will be mathematically derived. Starting from a time domain model, a mathematical approach of the problem will lead to an expression of an error function and a channel dependent matrix which form the basis of the present method.

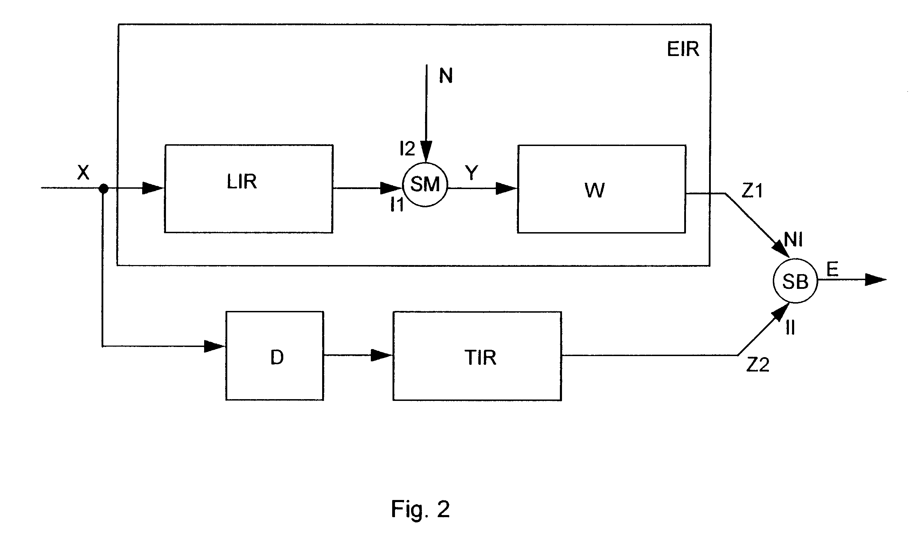

The time domain model is drawn in Fig. 2. Therein, the transmission line is represented by the cascade connection of a noiseless transmission line with impulse response LIR and an additive noise source wherein noise N is added via a summator SM to the output signal of the noiseless transmission line. This output signal enters the summator SM via a first input I1, whilst the noise N enters the summator SM via a second input i2 thereof. An input signal X applied to the transmission line appears at the output thereof as a distorted signal Y, distorted due to the transmission line impulse response LIR and due to the presence of the noise N. To compensate for these disturbances, a digital filter filters the distorted output signal Y. This digital filter is included in an equalizer characterized by a set of parameters W. The transmission line impulse response LIR and the equalizer parameters W constitute an equalized impulse response EIR or overall impulse response.

As already mentioned when describing the problem of intersymbol interference above, the global impulse response, i.e. the equalized impulse response EIR, should be short in length to enable avoiding intersymbol interference. Therefore, the equalized impulse response EIR in the digital model of Fig. 2 is compared to a target impulse response TIR, not further specified, but with a predetermined length L representing the guardband length or cyclic prefix length. This target impulse response TIR, delayed over a delay D has to approximate the equalized impulse response EIR to guarantee negligible intersymbol interference. Consequently, the mismatch between the equalized impulse response EIR and the target impulse response TIR has to be minimized. As will be seen in the calculations later on, an error E between the output Z1 of the equalizer and a fictive output Z2 of the target impulse response TIR constitutes the first contribution to an error that has to be minimized. These outputs Z1, and Z2 therefore in Fig. 2 are applied to a non-inverting input NI and an inverting input II of a subtractor SB respectively.

Following definitions are used in the mathematical approach later on in the description:

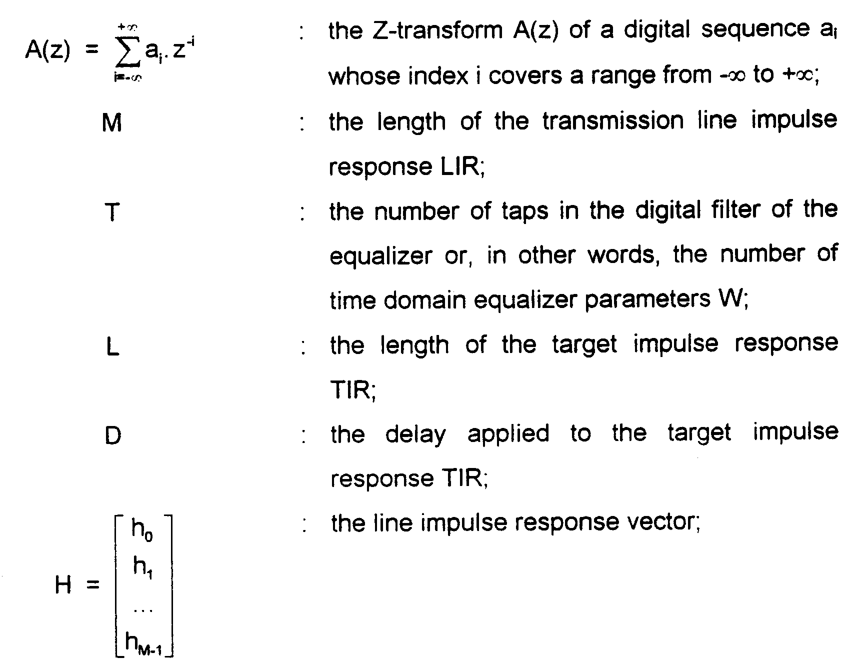

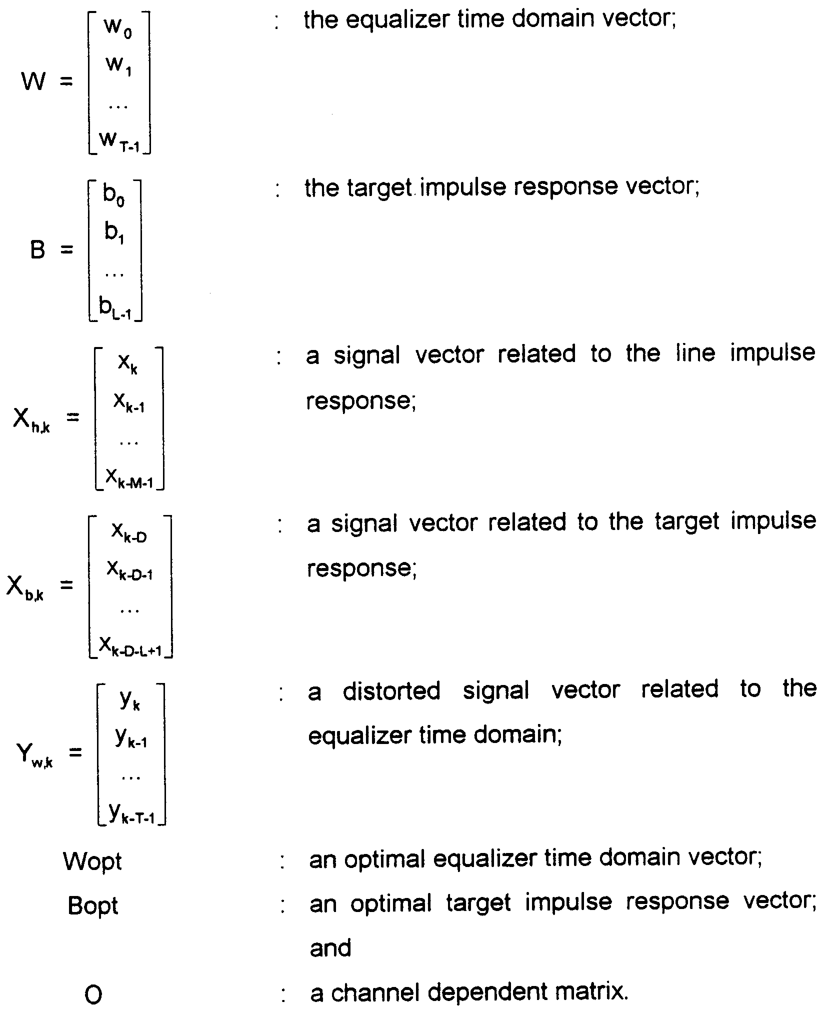

When an input signal X is applied to the transmission line, a distorted signal Y appears at the output thereof. The k' th sample, k being an integer number, of the distorted signal Y does not only depend upon the k' th sample of the input signal X but also upon M-1 previous samples of this input signal X. This is due to the transmission line impulse response LIR which has length M. The transmission line is not perfect as a result of which input samples transmitted in the past still have an influence on actual output samples. The k' th output sample yₖ of the transmission line can be expressed as follows:${\text{y}}_{\text{k}} \text{=} \text{i=0} \text{M-1} {\text{h}}_{\text{i}} {\text{.x}}_{\text{k-i}} {\text{+ n}}_{\text{k}}$ Herein, i represents an index and the influence of noise on the transmission line is concentrated in the term nₖ, this being a result of the digital model of Fig. 2. Using the above defined vectors, the expression in (1) can be simplified as follows:${\text{y}}_{\text{k}} {\text{= H}}^{\text{T}} {\text{.X}}_{\text{h,k}} {\text{+ n}}_{\text{k}}$ Herein, H^{T} represents the transposed vector of H.

The distorted output signal Y is applied to the equalizer to be digitally filtered thereby. Since the digital filter has T taps, the k' th sample z1ₖ of the equalized output signal Z1 is given by the convolution${\text{z1}}_{\text{k}} \text{=} \text{i=0} \text{T-1} {\text{w}}_{\text{i}} {\text{.y}}_{\text{k-i}}$ or, when using vector expression:${\text{z1}}_{\text{k}} {\text{= W}}^{\text{T}} {\text{.Y}}_{\text{w,k}}$ W^{T} represents the transposed vector of W herein.

When the input signal X further is applied to a fictive filter or fictive transmission line with an overall impulse response TIR whose length is restricted to L taps, a second, fictive, output signal Z2 is obtained. This overall impulse response TIR is called the target impulse response and is defined by the target impulse response vector B. The shape of the equalized impulse response EIR which comprises the line impulse response LIR and the digital filter in the time domain equalizer W response will be determined in such a way that it approaches this target impulse response TIR. To allow the equalized impulse response EIR to approach the target impulse response TIR, a delay is applied to this target impulse response TIR. This delay should be considered as an additional parameter which has to be determined somewhere in the method. The delayed target impulse response transforms the input signal X into the second output signal Z2, whose sample with index k is given by the convolution:${\text{z2}}_{\text{k}} \text{=} \text{i=0} \text{L-1} {\text{b}}_{\text{i}} {\text{.x}}_{\text{k-D-i}}$ or in matrix notation:${\text{z2}}_{\text{k}} {\text{= B}}^{\text{T}} {\text{.X}}_{\text{b,k}}$ Therein, B^{T} denotes the transposed vector of B.

The target impulse response TIR, the time domain equalizer parameters W and the delay D now have to be determined in such a way that the equalized impulse response EIR approaches the target impulse response TIR as close as possible. Therefore, output signals Z1 and Z2 are compared and the mismatch between both is minimized. This error is mathematically expressed by a sequence E whose k' th component eₖ is given by: sequence E whose k'th component eₖ is given by:${\text{e}}_{\text{k}} {\text{= z1}}_{\text{k}} {\text{-z2}}_{\text{k}} \text{=} \text{i=0} \text{T-1} {\text{w}}_{\text{i}} {\text{.y}}_{\text{k-i}} \text{-} \text{i=0} \text{L-1} {\text{b}}_{\text{i}} {\text{.x}}_{\text{k-D-i}}$ or, when using the vector notation:${\text{e}}_{\text{k}} {\text{= W}}^{\text{T}} {\text{.Y}}_{\text{w,k}} {\text{- B}}^{\text{T}} {\text{.X}}_{\text{b,k}}$ Thus, the error function that has to be minimized is equal to:${\text{E{e}}_{\text{k}}^{\text{2}} {\text{} = E{(W}}^{\text{T}} {\text{.Y}}_{\text{w,k}} {\text{- B}}^{\text{T}} {\text{.X}}_{\text{b,k}} {\text{)}}^{\text{2}} \text{}}$ Therein, E denotes the mean square error between Z1 and Z2. This mean square error is not dependent upon k and can thus be rewritten as follows:${\text{E{e}}^{\text{2}} {\text{} = E{(W}}^{\text{T}} {\text{.Y}}_{\text{w}} {\text{- B}}^{\text{T}} {\text{.X}}_{\text{b}} {\text{)}}^{\text{2}} \text{}}$ Since${\text{(W}}^{\text{T}} {\text{.Y}}_{\text{w}} {\text{-B}}^{\text{T}} {\text{.X}}_{\text{b}} {\text{)}}^{\text{2}} {\text{= W}}^{\text{T}} {\text{.Y}}_{\text{w}} {\text{.Y}}_{\text{w}}^{\text{T}} {\text{.W-2W}}^{\text{T}} {\text{.Y}}_{\text{w}} {\text{.X}}_{\text{b}}^{\text{T}} {\text{.B + B}}^{\text{T}} {\text{.X}}_{\text{b}} {\text{.X}}_{\text{b}}^{\text{T}} \text{.B}$ and by introducing the following correlation matrices:$\begin{matrix}\begin{matrix}{\text{R}}_{\text{YY}} {\text{= E{Y}}_{\text{w}} {\text{.Y}}_{\text{w}}^{\text{T}} \text{}} \\ {\text{R}}_{\text{YX}} {\text{= E{Y}}_{\text{w}} {\text{.X}}_{\text{b}}^{\text{T}} \text{}} \\ {\text{R}}_{\text{XX}} {\text{= E{X}}_{\text{b}} {\text{.X}}_{\text{b}}^{\text{T}} \text{}}\end{matrix}\end{matrix}$ (10) can be rewritten in the form:${\text{E{e}}^{\text{2}} {\text{} = W}}^{\text{T}} {\text{.R}}_{\text{YY}} {\text{.W+B}}^{\text{T}} {\text{.R}}_{\text{XX}} {\text{.B-2B}}^{\text{T}} {\text{.R}}_{\text{YX}}^{\text{T}} \text{.W}$ Herein: 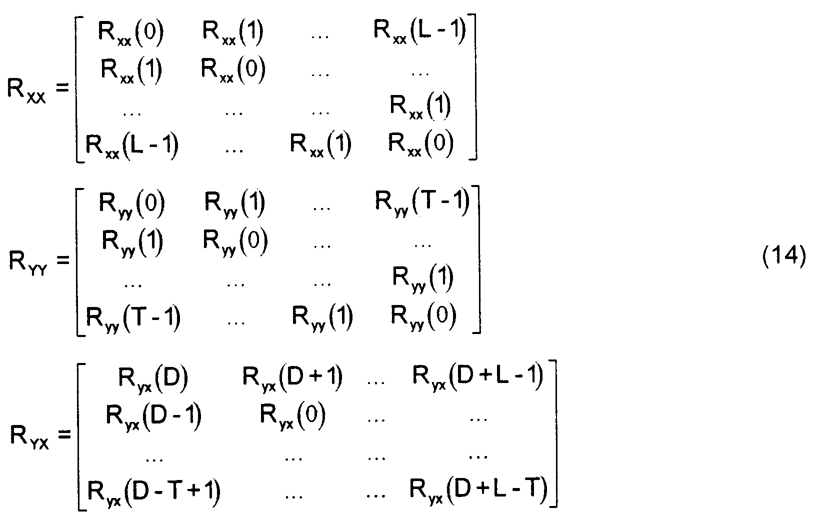 if it is assumed that the noise N is uncorrelated with the transmitted signal X. In (14):$\begin{matrix}\begin{matrix}{\text{R}}_{\text{xx}} {\text{(k)=E{x}}_{\text{i+k}} {\text{.x}}_{\text{i}} \text{}} \\ {\text{R}}_{\text{yy}} {\text{(k)=E{y}}_{\text{i+k}} {\text{.y}}_{\text{i}} \text{}} \\ {\text{R}}_{\text{yx}} {\text{(k)=E{y}}_{\text{i+k+D}} {\text{.x}}_{\text{i}} \text{}}\end{matrix}\end{matrix}$ It is remarked here that:${\text{R}}_{\text{yx}} {\text{(k)=E{y}}_{\text{i+k}} {\text{.x}}_{\text{i}} \text{}} \text{=E} \left\{\text{i=0} \text{M-1} {\text{h}}_{\text{l}} {\text{.x}}_{\text{i+k-l}} {\text{.x}}_{\text{i}}\right\} \text{=} \text{i=0} \text{M-1} {\text{h}}_{\text{l}} {\text{.E{x}}_{\text{i+k-l}} {\text{.x}}_{\text{i}} \text{}} \text{=} \text{i=0} \text{M-1} {\text{h}}_{\text{l}} {\text{.R}}_{\text{xx}} \text{(k-l)} {\text{= R}}_{\text{xx}} {\text{(k) ∗ h}}_{\text{k}}$ and similar calculations prove that:${\text{R}}_{\text{yy}} {\text{(k)=R}}_{\text{xx}} {\text{(k) ∗ (h}}_{\text{k}} {\text{∗ h}}_{\text{-k}} \text{)}$

To minimize the mean square error of (13) zero crossings of a partial differential should be found. The target impulse response vector B which allows to minimize the mean square error, i.e. the optimal target impulse response vector Bopt, in (13) is obtained by solving the equation:$\frac{{\text{δ(E{e}}^{\text{2}} \text{})}}{\text{δ(B)}} \text{= 0}$ Substitution of (13) therein results in:${\text{2R}}_{\text{XX}} {\text{.B - 2R}}_{\text{YX}} \text{.W = 0}$ which implies that the optimal target impulse response vector Bopt can be calculated once the equalizer time domain vector W is known via the formula:${\text{Bopt = R}}_{\text{XX}}^{\text{-1}} {\text{. R}}_{\text{YX}}^{\text{T}} \text{.W}$ Herein, R$\frac{\text{-1}}{\text{XX}}$ represents the inverse matrix of the above defined autocorrelation matrix R_{XX} and R$\frac{\text{T}}{\text{YX}}$ represents the transposed matrix of the crosscorrelation matrix R_{YX}.

To obtain an expression of the mean square error E which depends only upon the equalizer time domain vector W, (20) is substituted in (13). Thus:${\text{E{e}}^{\text{2}} {\text{} = W}}^{\text{T}} {\text{.R}}_{\text{YY}} {\text{.W + W}}^{\text{T}} {\text{.R}}_{\text{YX}} {\text{.(R}}_{\text{XX}}^{\text{-1}} {\text{)}}^{\text{T}} {\text{.R}}_{\text{XX}} {\text{.R}}_{\text{XX}}^{\text{-1}} {\text{.R}}_{\text{YX}}^{\text{T}} {\text{.W -2W}}^{\text{T}} {\text{.R}}_{\text{YX}} {\text{.(R}}_{\text{XX}}^{\text{-1}} {\text{)}}^{\text{T}} {\text{.R}}_{\text{YX}}^{\text{T}} \text{.W}$ which is further simplified as follows:${\text{E{e}}^{\text{2}} {\text{} = W}}^{\text{T}} {\text{.(R}}_{\text{YY}} {\text{+R}}_{\text{YX}} {\text{.(R}}_{\text{XX}}^{\text{-1}} {\text{)}}^{\text{T}} {\text{.R}}_{\text{YX}}^{\text{T}} {\text{- 2R}}_{\text{YX}} {\text{.(R}}_{\text{XX}}^{\text{-1}} {\text{)}}^{\text{T}} {\text{.R}}_{\text{YX}}^{\text{T}} \text{).W} {\text{= W}}^{\text{T}} {\text{.(R}}_{\text{YY}} {\text{-R}}_{\text{YX}} {\text{.(R}}_{\text{XX}}^{\text{-1}} {\text{)}}^{\text{T}} {\text{.R}}_{\text{YX}}^{\text{T}} \text{).W}$ From ${\text{R}}_{\text{XX}} {\text{.R}}_{\text{XX}}^{\text{-1}} \text{= I}$, wherein I represents the unity matrix, it follows that ${\text{(R}}_{\text{XX}}^{\text{-1}} {\text{)}}^{\text{T}} {\text{.R}}_{\text{XX}}^{\text{T}} \text{= I}$, and thus that ${\text{(R}}_{\text{XX}}^{\text{-1}} {\text{)}}^{\text{T}} {\text{= (R}}_{\text{XX}}^{\text{T}} {\text{)}}^{\text{-1}}$.
As a result, (22) can be transformed into:${\text{E{e}}^{\text{2}} {\text{} = W}}^{\text{T}} {\text{.(R}}_{\text{YY}} {\text{- R}}_{\text{YX}} {\text{.(R}}_{\text{XX}}^{\text{T}} {\text{)}}^{\text{-1}} {\text{R}}_{\text{YX}}^{\text{T}} \text{).W}$ From the definition of the autocorrelation matrix R_{XX} in (14), it further follows that ${\text{R}}_{\text{XX}}^{\text{T}} {\text{= R}}_{\text{XX}}$ as a result of which:${\text{E{e}}^{\text{2}} {\text{} = W}}^{\text{T}} {\text{.(R}}_{\text{YY}} {\text{- R}}_{\text{YX}} {\text{.R}}_{\text{XX}}^{\text{-1}} {\text{.R}}_{\text{YX}}^{\text{T}} \text{).W} {\text{= W}}^{\text{T}} \text{.O.W}$ Herein, O is a channel dependent matrix given by the expression:${\text{O = R}}_{\text{YY}} {\text{- R}}_{\text{YX}} {\text{.R}}_{\text{XX}}^{\text{-1}} {\text{.R}}_{\text{YX}}^{\text{T}}$ When minimizing E{e²} by searching the equalizer time domain vector W which minimizes W^{T}. O. W it is obvious that the solution:$\text{W =} \left[\begin{matrix}\text{0} \\ \text{0} \\ \text{...} \\ \text{0}\end{matrix}\right] \text{and thus: Bopt =} \left[\begin{matrix}\text{0} \\ \text{0} \\ \text{...} \\ \text{0}\end{matrix}\right]$ will be found. However, this solution would imply that no signal could be transmitted over the transmission line. To obtain another solution, different from the zero-filter, an energy constraint:${\text{W}}^{\text{T}} \text{.W = 1}$ has to be fulfilled.
Thus, the mean square error (24) has to be minimized by taking into account the constraint (27). This is done by solving the equations:$\begin{matrix}\begin{matrix}\frac{{\text{δ(E{e}}^{\text{2}} {\text{} - λ.(W}}^{\text{T}} \text{.W-1))}}{\text{δ W}} \text{= 0} \\ \frac{{\text{δ(E{e}}^{\text{2}} {\text{} - λ.(W}}^{\text{T}} \text{.W-1))}}{\text{δ λ}} \text{= 0}\end{matrix}\end{matrix}$ Substituting (24) in (28) and calculating the partial derivative results in:$\begin{matrix}\begin{matrix}\text{2.O.W - 2.λ.W = 0} \\ {\text{W}}^{\text{T}} \text{.W-1 = 0}\end{matrix}\end{matrix}$ The second equation in (29) again represents constraint (27) which has to be fulfilled. The first equation is equivalent to:$\text{O.W = λ.W}$ The equation (30) is an eigenvalue-eigenvector problem.
Since${\text{min(E{e}}^{\text{2}} {\text{}) = min(W}}^{\text{T}} {\text{.O.W) = min(W}}^{\text{T}} \text{.λ.W)} {\text{= min(λ.W}}^{\text{T}} \text{.W) = min(λ),}$ the optimal equalizer time domain vector Wopt equals the eigenvector of O which corresponds to the minimum eigenvalue λmin thereof.

Thus, summarizing the above calculations, the channel dependent matrix O has to be built up, the minimum eigenvalue λmin and corresponding eigenvector of O have to be calculated. This eigenvector equals the optimized equalizer time domain vector Wopt and finally, the optimal target impulse response vector is calculated from Wopt via equation (20). Once the matrix O is known, all steps to derive therefrom the equalizer time domain parameters W are thus known.

Formula (25) shows that the channel dependent matrix O only depends on the transmitted signal X and received distorted signal Y. The signal X is transmitted at the initialisation of the system and is well known by the receiver. At reception of the distorted signal Y, the receiver is thus enabled to calculate the channel dependent matrix O. The dependency between O and the signals X and Y is expressed in (25) via the matrices R_{XX}, the autocorrelation matrix of the transmitted signal X, R_{YY}, the autocorrelation matrix of the distorted signal Y, and R_{YX}, the crosscorrelation matrix of the signals X and Y. Notice however that, via R_{YX}, O also depends on the delay parameter D. This implies that for each delay value, a new channel dependent matrix O has to be constructed, each of which giving a new Wopt and Bopt.

Simplified models and assumptions may allow to simplify the computations necessary to construct the channel dependent matrix O.

In a first simplified implementation of the present invention, the transmitted signal X is supposed to have flat power spectral density, whilst noise N on the transmission line is supposed to be negligible. Thus, the correlation matrices R_{NN}(k) and R_{XX}(k) are as follows:$\begin{matrix}\begin{matrix}{\text{R}}_{\text{NN}} \text{(k)=0} \\ {\text{R}}_{\text{XX}} {\text{(k)=S}}_{\text{X}} \text{.δ(k)}\end{matrix}\end{matrix}$ Therein,$\begin{matrix}\begin{matrix}{\text{S}}_{\text{X}} {\text{= E(x}}_{\text{i}}^{\text{2}} \text{),} \\ \text{δ(k)= for k=0, and} \\ \text{δ(k)=0 for k ≠ 0.}\end{matrix}\end{matrix}$ The autocorrelation matrix R_{XX} therefore becomes equal to:${\text{R}}_{\text{XX}} {\text{= S}}_{\text{X}} \text{.I,}$ wherein I represents the identity matrix.
Substituting these expressions for R_{NN}(k) and R_{XX}(k) in the above expressions (15) for R_{YX}(k) and R_{YY}(k), and substituting all the correlation matrices in the channel dependent matrix O (25), it is found that:${\text{O = S}}_{\text{X}} \overline{\overline{\text{H}}} {\text{.}}_{\text{TxT}} \text{-} {\overline{\text{H}}}_{\text{TxL}} \text{.} {\overline{\text{H}}}_{\text{TxL}}^{\text{T}}$ with: 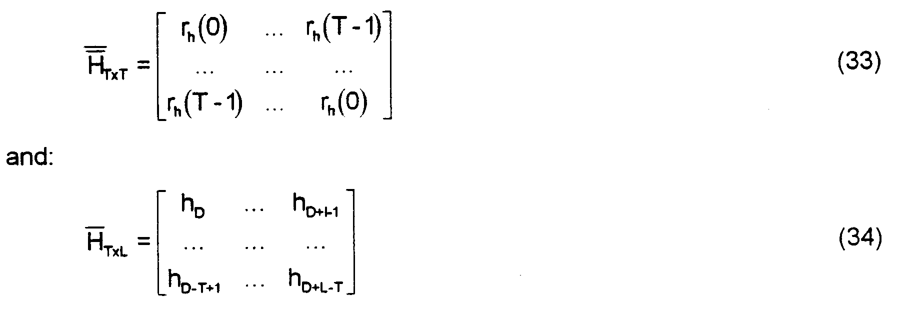 In (33):${\text{r}}_{\text{h}} {\text{(k)=h}}_{\text{k}} {\text{∗h}}_{\text{-k}} \text{=} \text{i=0} \text{M-1} {\text{h}}_{\text{i}} {\text{.h}}_{\text{i+k}}$ When measuring in an initial step the line impulse response vector H, the matrix O can be constructed.

In a second simplified implementation of the present method, the transmission line still is considered to be noiseless but the power spectral density of the transmitted signal X is no longer flat. The given power spectral density of the signal X has to be taken into account which leads to a new expression for the matrix O.

In another implementation of the present method, noise N on the transmission line is not negligible but the power spectral density of this noise N is known via additional measurements previously executed. In this implementation, a new channel dependent matrix O is to be constructed wherein the noise influence is expressed via a term Rₙₙ(k) which is added to the expression in formula (17). R_{yy}(k) now is given by:${\text{R}}_{\text{yy}} {\text{(k)=R}}_{\text{xx}} {\text{(k)∗(h}}_{\text{k}} {\text{∗h}}_{\text{-k}} {\text{)+R}}_{\text{nn}} \text{(k)}$

Although the above described embodiments exhibit a very low mean square error value and accordingly a negligible intersymbol interference outside the guardband, the applicability thereof in ADSL is doubtful. As already indicated in the introduction, a concentration of the energy in the unused frequency band has to be avoided. The mean reason for his can best be explained by a frequency domain approach. Suppose that H(i) represents the channel transfer function in the frequency domain, and E(i) represents an error, equivalent to E, built up in the frequency domain. Thriving towards a zero error$\text{E(i)≈0}$ implies that$\text{W(i).Y(i)=B(i).X(i)}$ wherein W(i), Y(i), B(i) and X(i) are frequency domain representations of the equalizer, the distorted signal, the target response, and the signal respectively. Equation (38) is equivalent to:$\text{W(i).} \frac{\text{Y(i)}}{\text{X(i)}} \text{=B(i)}$ and thus to:$\text{W(i).H(i)=B(i)}$ since the channel response H(i) is equal to:$\text{H(i)=} \frac{\text{Y(i)}}{\text{X(i)}}$ If W(i), H(i) and B(i) are split up into unused band and used band matrices, the above expression (40), because of the FDM (Frequency Division Multiplexing) filters used in ADSL is rewritten as:$\left[\begin{matrix}{\text{W(i)}}^{\text{used}} \\ {\text{W(i)}}^{\text{unused}}\end{matrix}\right] \text{.} \left[\begin{matrix}\text{0} \\ {\text{H(i)}}^{\text{unused}}\end{matrix}\right] \text{=} \left[\begin{matrix}{\text{B(i)}}^{\text{used}} \\ {\text{B(i)}}^{\text{unused}}\end{matrix}\right]$ This results in three conditions: 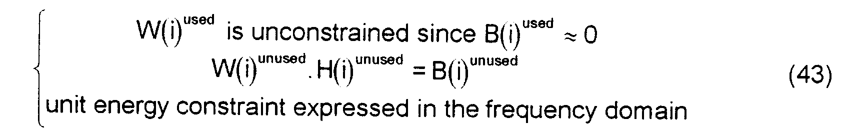 Although the energy unity norm avoids convergence towards the full zero solution, one notices that the unity norm does not guarantee avoidance of a full zero solution in the useful frequency band. Therefore, the equalizer coefficients W have to be constrained in order to avoid to concentrate the TEQ energy in the used bandwidth.

In the time domain approach of the above paragraphs, the TEQ energy can be concentrated in the used bandwidth by adding an additional degree of freedom. The higher the energy in the unused frequency band, the worse the set of equalizer parameters W is chosen. This is expressed by adding the energy in the unused frequency band as an additional contribution to the above mean square error E. In this way, one obtains the constrained mean square error CE:$\text{CE=E+} \text{µ} {\text{.E}}_{\text{DC}}$ Herein, E represents the error contribution due to the distance between the equalized impulse response EIR and the target impulse response TIR, and E_{DC} represents the energy in the unused frequency band or 'don't care' band. The suppression factor µ is a factor that determines how much the energy in this unused frequency band has to be suppressed.
Writing E_{DC} in a matrix notation, one obtains:${\text{E}}_{\text{DC}} {\text{=W}}^{\text{T}} {\text{.F}}_{\text{DC}}^{\text{T}} {\text{.F}}_{\text{DC}} {\text{.W=W}}^{\text{T}} \text{.D.W}$ with 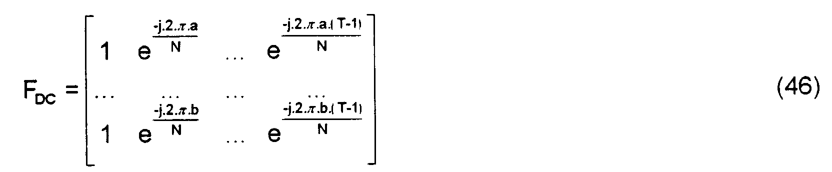 Herein, a and b are indexes belonging to the unused or 'don't care' band.
If (13) and (45) are integrated in (44), following result is found:${\text{E}}_{\text{DC}} {\text{= W}}^{\text{T}} {\text{.(R}}_{\text{YY}} \text{+} \text{µ} {\text{.D)+B}}^{\text{T}} {\text{.R}}_{\text{XX}} {\text{.B-2.B}}^{\text{T}} {\text{.R}}_{\text{YX}}^{\text{T}} \text{.W}$ It is noticed that the matrix R_{YY} in (13) has been replaced by R_{YY} + µD. As a consequence, the eigenvector solution representing the optimal set of equalizer parameters is found by solving the eigenvalue-eigenvector problem for a new channel dependent matrix O':${\text{O'=(R}}_{\text{YY}} \text{+} \text{µ} {\text{.D)-R}}_{\text{YX}} {\text{.R}}_{\text{XX}}^{\text{-1}} {\text{.R}}_{\text{YX}}^{\text{T}}$ The additional term µ.D herein can be shown to be equivalent to the insertion of a constant virtual noise power spectral density component into the unused frequency band. The term 'virtual' is used here to indicate that this is not real measured but mathematically injected noise.

It is remarked here that although the described embodiment in the above paragraphs is a time domain realization, the present invention also is applicable in frequency domain approaches of the mean square error method. The error eₖ can be rewritten in terms of circular convolutions instead of linear convolutions when using the FFT transform. In this way, a frequency domain error criterion is obtained. Such a frequency domain approach will not be described in further detail in the present application. However, via the above described time domain example it is clear to a person skilled in the art how to adapt e.g. the frequency domain approach of *J.S. Chow, J.M. Cioffi and J.A.C.* *Bingham in their article 'Equalizer Training Algorithms for Multicarrier Modulation Systems', Proc. IEEE, p. 761-765, 1993* to be in accordance with the present invention. Indeed, such a frequency domain approach can also be adjusted to the FDM requirements by modifying the frequency domain mean square error E(i) in a frequency domain constrained mean square error CE(i):$\text{CE(i)=E(i)+} \text{µ} {\text{(i).|W(i)}}^{\text{2}} \text{|}$ with

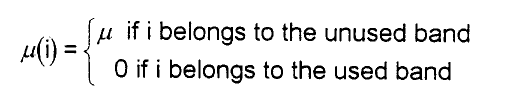

It is further remarked that, for implementation issues, it is better to avoid injecting noise close to the FDM filter boundaries in order to avoid too much attenuation of the first tones of the used band. It is therefore recommended to leave a buffer zone without virtually injected noise between the unused and used frequency bands. As an alternative, one could use a shaped virtual noise instead of a constant virtual noise.

Still another remark is that intelligent implementations of the present method are taking into account that the calculated equalizer coefficients will be rounded. Therefore it is better to reduce the dynamic range and thus to have higher gains in the used bandwidth. As a consequence, when different criterions provide equivalent solutions for Wopt and Bopt, precision requirements will be taken into account to select one of the solutions. By selecting the solution with least dynamic range, the precision performance will be increased.

As already noticed above, the channel dependent matrix O depends on the delay parameter D. Thus, the delay value which minimizes the intersymbol interference has to be found to select the best Wopt. The complete theoretical search range for D would be from zero to M. However, without significant loss of performance, the search range for D can be reduced. To reduce the processing time, one could search for example for D values within a limited interval around Dpeak, Dpeak being the index number (between 0 and M) of the peak value of the transmission line impulse response H.

Furthermore, it is noted that, to reduce the computation time, the power method can be used to calculate the only eigenvector Wopt which has to be found in the present method. This very fast and iterative method is well known but extracts only the eigenvector belonging to the largest eigenvalue of a matrix. The above eigenvalue-eigenvector problem (30) therefore is rewritten as follows:${\text{O.W=λ.W ⇔ O}}^{\text{-1}} {\text{.W=λ}}^{\text{-1}} \text{.W}$ Thus, an eigenvector of matrix O according to eigenvalue λ is also an eigenvector of matrix O⁻¹ according to the eigenvalue λ⁻¹. The eigenvector Wopt according to the minimum eigenvalue λmin of O is thus found as the eigenvector according to the maximum eigenvalue λmin⁻¹ of the matrix O⁻¹.

While the principles of the invention have been described above in connection with specific apparatus, it is to be clearly understood that this description is made only by way of example and not as a limitation on the scope of the invention.

## Claims

1. A method for calculating a set of LW equalizer parameters (W), LW being a positive integer number, for an equalizer included in a receiver to which a transmitter is coupled via a transmission line and which is able to receive a distorted signal (Y) distorted due to transmission over said transmission line of a signal (X), and which is adapted to equalize a transmission line impulse response (LIR) of said transmission line and to thereby generate an equalized impulse response (EIR) which approximates a target impulse response (TIR) with a predetermined target impulse response length and delayed over a predetermined delay (D), said method comprising the steps of:
a. transmitting said signal (X) and determining said distorted signal (Y) in said receiver;
b. defining a first integer number of sample periods which represents said target impulse response length;
c. defining a second integer number of sample periods which represents said predetermined delay (D);
d. generating a channel dependent matrix (O) from said signal (X), said distorted signal (Y), said target impulse response length (L) and said predetermined delay (D), said channel dependent matrix (O) being related to an error function (E) that has to be minimized;
e. calculating a minimum eigenvalue (Lmin) of said channel dependent matrix (O);
f. calculating an eigenvector of said channel dependent matrix (O), said eigenvector corresponding to said minimal eigenvalue (Lmin);
g. generating said set of LW equalizer parameters (W) from said eigenvector,
characterized in that said error function (E) comprises a first contribution, representing a difference between said equalized impulse response (EIR) and said target impulse response (TIR), and a second contribution representing an amount of energy (E_{DC}) transmitted in unused frequency bands.

2. A method according to claim 1, characterized in that said channel dependent matrix (O) comprises a first contribution, corresponding to said first contribution of said error function (E), said first contribution of said channel dependent matrix (O) being equal to RYY-RYX.RXX⁻¹.RYX^{T}, wherein RYY represents an average autocorrelation matrix of a sequence of samples of said distorted signal (Y), said sequence having a length equal to LW, wherein RXX represents an average autocorrelation matrix of a sequence of samples of said signal (X), said sequence having a length equal to said target impulse response length, wherein RYX represents an average correlation matrix of said sequence of samples of said signal (X) and said sequence of samples of said distorted signal (Y), and wherein RXX⁻¹ represents an inverse matrix of RXX and RYX^{T} represents a transposed matrix of RYX.

3. A method according to claim 1, characterized in that, to generate said channel dependent matrix (O) said transmission line is supposed to be noiseless.

4. A method according to claim 1, characterized in that, to generate said channel dependent matrix (O), said signal (X) applied to said transmission line by said transmitter is supposed to have a flat power spectral density.

5. A method according to claim 1, characterized in that, to generate said channel dependent matrix (O), said transmission line is not supposed to be noiseless and that said method further includes a step of measuring noise (N) on said transmission line before said channel dependent matrix (O) is generated.

6. A method according to claim 2, characterized in that RYY(k), which is an element in said autocorrelation matrix RYY whose row index and column index are different from each other over an integer value k, is equal to RXX(k).rh(k) + RNN(k), wherein RXX(k) represents an element in said autocorrelation matrix RXX whose row index and column index are different over said integer value k, wherein rh(k) represents a convolution of said transmission line impulse response (LIR) and said transmission line impulse response (LIR) delayed over k samples, and wherein RNN(k) represents an element in a matrix RNN, whose row index and column index are different over said integer value k, said matrix RNN being an average autocorrelation matrix of noise (N) measured on said transmission line.

7. A method according to claim 1, characterized in that said predetermined delay (D) depends upon amplitude and index number of a sample of said transmission line impulse response (LIR) with maximum amplitude.

8. A method according to claim 1, characterized in that before executing steps f and g, steps c, d, and e are repeatedly executed, said second integer number of sample periods being different in successive executions of step c but laying within an interval of acceptable delay values, said channel dependent matrix (O) generated in successive executions of step d as a result thereof being different in such a way that a plurality of minimum eigenvalues similar to said minimum eigenvalue (Lmin) is calculated in successive executions of said step e, and that to perform steps f and g, only a said channel dependent matrix with smallest said minimum eigenvalue (Lmin) is selected.

9. A device for calculating a set of LW equalizer parameters (W), LW being a positive integer number, for an equalizer included in a receiver to which a transmitter is coupled via a transmission line and which is able to receive a distorted signal (Y) distorted due to transmission over said transmission line of a signal (X), and which is adapted to equalize a transmission line impulse response (LIR) of said transmission line and to thereby generate an equalized impulse response (EIR) which, when delayed over a predetermined delay (D), approximates a target impulse response (TIR) with a predetermined target impulse response length, said device including:
a. a determining means to determine said distorted signal (Y) received upon transmission of said signal (X);
b. a first definition means to define a first integer number of sample periods which represents said target impulse response length;
c. a second definition means to define a second integer number of sample periods which represents said predetermined delay (D);
d. a first generation means to generate a channel dependent matrix (O) from signal (X), said distorted signal (Y), said target impulse response length and said predetermined delay (D), said channel dependent matrix (O) being related to an error function (E) which has to be minimized;
e. a first calculation means to calculate a minimal eigenvalue (Lmin) of said channel dependent matrix (O);
f. a second calculation means to calculate an eigenvector of said channel dependent matrix (O), said eigenvector corresponding to said minimal eigenvalue (Lmin);
g. a second generation means to generate said set of LW equalizer parameters (W) from said eigenvector,
characterized in that said error function (E) comprises a first contribution, representing a difference between said equalized impulse response (EIR) and said target impulse response (TIR), and a second contribution representing an amount of energy (E_{DC}) transmitted in unused frequency bands.

10. A demodulator (DEMOD) including between an input (DI) and an output (DO) thereof, the cascade connection of an analog to digital converter (ADC), a time domain equalizer (TEQ), a serial to parallel converter (SFC) a fast fourier transform processing unit (FFT), a frequency domain equalizer (FEQ) and a demapper (DM), said analog to digital converter (ADC) being provided to convert a disturbed input signal applied to said demodulator input (DI) into a time domain digital signal, said time domain equalizer (TEQ) being provided to digitally filter said time domain digital signal and to thereby generate a time domain equalized signal, said serial to parallel converter (SPC) being provided to transform said time domain equalized signal into a time domain parallel sequence, said fast fourier transform processing unit (FFT) being provided to process said time domain parallel sequence and to thereby generate a frequency domain parallel sequence, said frequency domain equalizer being provided to digitally filter said frequency domain parallel sequence, and said demapper (DM) being provided to demodulate said frequency domain parallel sequence and to generate therefrom an output signal applied to said demodulator output (DO), said time domain equalizer (TEQ) including a device for calculating a set of LW equalizer parameters (W), LW being a positive integer number, for said time domain equalizer (TEQ), said demodulator (DEMOD) being coupled to a transmitter via a transmission line and being able to receive a distorted signal (Y) distorted due to transmission over said transmission line of a signal (X), and which is adapted to equalize a transmission line impulse response (LIR) of said transmission line and to thereby generate an equalized impulse response (EIR) which, when delayed over a predetermined delay (D), approximates a target impulse response (TIR) with a predetermined target impulse response length, said device including:
a. determining means to determine said distorted signal (Y) received upon transmission of said signal (X);
b. a first definition means to define a first integer number of sample periods which represents said target impulse response length;
c. a second definition means to define a second integer number of sample periods which represents said predetermined delay (D);
d. a first generation means to generate a channel dependent matrix (O) from said signal (X), said distorted signal (Y), said target impulse response length and said predetermined delay (D), said channel dependent matrix (O) being related to an error function (E) which has to be minimized;
e. a first calculation means to calculate a minimal eigenvalue (Lmin) of said channel dependent matrix (O);
f. a second calculation means to calculate an eigenvector of said channel dependent matrix (O), said eigenvector corresponding to said minimal eigenvalue (Lmin);
g. a second generation means to generate said set of LW equalizer parameters (W) from said eigenvector,
characterized in that said error function (E) comprises a first contribution, representing a difference between said equalized impulse response (EIR) and said target impulse response (TIR), and a second contribution representing an amount of energy (E_{DC}) transmitted in unused frequency bands.
